# EUROPÄISCHE PATENTSCHRIFT

(11) **EP 2 298 603 B1**
(45) Veröffentlichungstag und Bekanntmachung des Hinweises auf die Patenterteilung: **03.07.2013**
(21) Anmeldenummer: 10008507.5
(22) Anmeldetag: 14.08.2010
(51) Int. Cl.: B60Q 1/12

(54) **Verfahren zur prädiktiven Ansteuerung eines adaptiven Kurvenlichts und Kraftfahrzeug**
Method for predictive control of an adaptive forward lighting headlamp and motor vehicle
Procédé de commande prédictive d'un phare de virage adaptatif et véhicule automobile

(30) Priorität: 16.09.2009 DE 102009041698
(43) Veröffentlichungstag der Anmeldung: 23.03.2011
(73) Patentinhaber: Audi AG, 85045 Ingolstadt (DE)
(72) Erfinder: Funk, Christian, 85080 Gaimersheim (DE); Siedersbeck, Alfons, 94560 Offenberg (DE); Kenn, Christoph, 53489 Sinzig (DE); Berlitz, Stephan, 86529 Schrobenhausen (DE)
(74) Vertreter: Thielmann, Frank

(56) Entgegenhaltungen:
- EP-A2- 0 842 817
- EP-A2- 1 905 643
- DE-A1- 19 723 045
- DE-A1-102005 022 677
- JP-A- 2002 225 618

## Beschreibung

Die Erfindung betrifft ein Verfahren zur prädiktiven Ansteuerung eines adaptiven Kurvenlichts, wobei aus einer Positions- und Fahrtrichtungsinformation des Kraftfahrzeugs und einem Straßenverlauf ein Schwenkwinkel ermittelt wird, um den wenigstens ein Frontscheinwerfer des Kraftfahrzeugs geschwenkt wird, sowie ein Kraftfahrzeug.

Adaptives Kurvenlicht, häufig auch als adaptives Frontbeleuchtungssystem (AFS) bezeichnet, ist bekannt und ermöglicht eine bessere Ausleuchtung der zu befahrenden Strecke beim Durchfahren einer Kurve durch ein Kraftfahrzeug. Dabei sind Kurvenlichtsysteme bekannt, bei welchen aus dem Lenkwinkel und der Geschwindigkeit des Kraftfahrzeugs ein Sollschwenkwinkel der Frontscheinwerfer ermittelt wird. In diesen Fällen wird also nur der aktuelle Fahrzustand des Kraftfahrzeugs berücksichtigt. Hieraus kann jedoch im Allgemeinen nicht geschlussfolgert werden, wie der Straßenverlauf vor dem Kraftfahrzeug aussieht, so dass hierdurch keine optimale Ausleuchtung erfolgen kann.

Daher wurden sogenannte prädiktive adaptive Frontbeleuchtungssysteme (pAFS) bzw. prädiktives adaptives Kurvenlicht vorgeschlagen, bei denen zusätzlich Informationen über den Straßenverlauf vor dem Kraftfahrzeug und eine Positionsinformation des Kraftfahrzeugs berücksichtigt werden. Der Straßenverlauf kann dabei beispielsweise aus einem Navigationssystem bekannt sein, Positions- und Fahrtrichtungsinformationen können über Satellitensysteme, beispielsweise über einen GPS-Sensor, bestimmt werden. Unabhängig davon, woher die Positions- und Fahrtrichtungsinformation und die Information über den zukünftigen Straßenverlauf stammen, ist nun bekannt, wie das Kraftfahrzeug relativ zum Straßenverlauf positioniert und orientiert ist. Der zukünftige Straßenverlauf kann dann folglich mit in die Bestimmung des Schwenkwinkels eingehen. Dazu ist es üblich, eine statische Vorausschau durchzuführen, das bedeutet, es wird ein Anpeilpunkt betrachtet, der von einem ausgezeichneten Punkt des Kraftfahrzeugs - meist dem Mittenpunkt zwischen den insbesondere zwei oder auch vier Frontscheinwerfern - entlang der Fahrspurmitte, die als Trajektorie angenommen wird, um einen festen Abstand beabstandet ist. Als Resultat erhält man eine gegenüber den herkömmlichen, hauptsächlich auf den Lenkwinkel basierenden adaptiven Kurvenlichtsystemen zwar eine Verbesserung, dennoch ist die Kurvenausleuchtung krümmungsabhängig und damit ungleichmäßig.

JP 2002-225618 A betrifft ein Scheinwerfersystem für ein Fahrzeug, bei dem die Scheinwerfer bereits bei der Annäherung an eine kurvige Straße geschwenkt werden können. Es wird vorgeschlagen, während des Fahrens auf der kurvigen Straße einen ersten Winkel zwischen einer Mittenlinie des Kraftfahrzeugs und einer Tangente als Schwenkwinkel zu verwenden. Bei der Annäherung an die Straße wird zunächst ein Winkel zu einem festen Punkt verwendet, bis der erste Winkel größer als dieser zweite Winkel wird.

Der Erfindung liegt daher die Aufgabe zugrunde, ein diesbezüglich verbessertes Ansteuerungsverfahren anzugeben, wodurch eine gleichmäßigere und dem Blickverhalten des Fahrers bei Tag eher angepasste Kurvenausleuchtung ermöglicht wird.

Zur Lösung dieser Aufgabe ist ein Verfahren mit den Merkmalen des Anspruchs 1 vorgesehen.

Die Erfindung schlägt mithin eine gänzlich neue Herangehensweise an die Bestimmung des Schwenkwinkels vor, die sich an Tangenten an die Fahrspurbegrenzung orientiert. Als vorbestimmter Bezugspunkt des Kraftfahrzeuges wird dabei vorteilhafterweise die Position des Fahrers gewählt, da letztlich dessen Blickverhalten abgebildet wird, wie sich bei der Entwicklung der vorliegenden Erfindung zeigte. Denn es wurde festgestellt, dass sich das Blickverhalten eines Fahrers bei Tage häufig gerade an den kurveninneren Fahrspurbegrenzungen - bei einer Rechtskurve beispielsweise eine Randmarkierung, bei einer Linkskurve beispielsweise an der Mittelspurmarkierung - orientiert, so dass das erfindungsgemäße Verfahren, welches über diese Tangente ebenso an der Fahrspurbegrenzung orientiert ist, das Blickverhalten des Fahrers widerspiegelt und somit es dem Fahrer vorteilhaft ermöglicht, dasselbe Blickverhalten wie bei Tage anzunehmen. Dabei ist es selbstverständlich, dass der tatsächliche zukünftige Straßenverlauf vor dem Kraftfahrzeug betrachtet wird.

Dabei wird folglich von der statischen Vorausschau des Standes der Technik - soweit möglich - abgegangen, um eine tangentenorientierte dynamische Vorausschau mit insbesondere wechselnden Anpeilabständen zu ermöglichen. Dadurch wird nicht nur eine gleichmäßigere Kurvenausleuchtung erzielt, sondern auch eher auf das übliche Blickverhalten des Fahrers eingegangen.

Entsprechend kann vorzugsweise vorgesehen sein, dass der Schwenkwinkel als Winkel zwischen der Fahrtrichtung und einer den Mittenpunkt zwischen den insbesondere zwei Frontscheinwerfern und den Tangentenpunkt als Anpeilpunkt verbindenden Gerade ermittelt wird. Der Tangentenpunkt wird folglich als Anpeilpunkt verwendet, um den Winkel zu bestimmen, wobei hier Bezug auf den Mittenpunkt zwischen den Frontscheinwerfern genommen wird, um einen Schwenkwinkel zu ermitteln, über den dann unmittelbar die Frontscheinwerfer angesteuert werden können.

Eine derartige Ansteuerung der Frontscheinwerfer erfolgt im erfindungsgemäßen Verfahren selbstverständlich immer dann, wenn sich der Schwenkwinkel verändert, also eine Veränderung der Abstrahlrichtung der Frontscheinwerfer erforderlich ist. Die Messdaten umfassenden Informationen zur Position, Fahrtrichtung und zum Straßenverlauf werden mithin auf eine bislang unbekannte Art und Weise ausgewertet, um eine verbesserte Ansteuerung der schwenkbaren Frontscheinwerfer zu erreichen.

Bei bestimmten Straßenverläufen ist es jedoch nicht möglich, eine solche Tangente und einen Tangentenpunkt jedem Zeitpunkt zu bestimmen. Als Beispiel sei hierbei die Kurvenausfahrt genannt. Sobald sich der Bezugspunkt des Kraftfahrzeugs über die verlängerte, sich an die Kurve anschließende Gerade hinausbewegt, kann keine Tangente und somit auch kein Tangentenpunkt mehr aufgefunden werden.

In solchen Fällen wird mit besonderem Vorteil ein hybrides Verfahren verwendet, wobei folglich wenigstens zwei Verfahren zur Ermittlung eines Anpeilpunktes und somit eines Schwenkwinkels miteinander verbunden werden, um die Bestimmung eines Schwenkwinkels auf möglichst gleichmäßige Art in allen Situationen einer Kurvenfahrt zu ermöglichen. Dazu ist vorgesehen, dass in Bereichen, in denen keine Tangente aufgefunden wird, nach einem gegebenenfalls vorgesehenen Übergangsbereich, der Schwenkwinkel aufgrund einer statischen Vorausschau bestimmt wird, wobei ein in einem festen Abstand zum Kraftfahrzeug auf der Fahrspurmitte liegender Punkt als Anpeilpunkt verwendet wird. Der Abstand kann dabei ein Abstand entlang der Spurmitte, die als Trajektorie angenommen wird, sein. Es kann also eine Kombination der tangentialen Vorausschau und der einleitend bereits diskutierten statischen Vorausschau genutzt werden. Bei der statischen Vorausschau wird der Schwenkwinkel folglich als Winkel zwischen der Fahrtrichtung und einer den Mittenpunkt zwischen den Frontscheinwerfern und den Anpeilpunkt verbindenden Gerade bestimmt.

Dabei gibt es grundsätzlich mehrere Möglichkeiten, den Übergang bzw. den Übergangsbereich zwischen der tangentialen Vorausschau und der statischen Vorausschau zu realisieren, wobei auf einen möglichst gleichmäßigen, dem Blickverhalten des Fahrers angepassten Schwenkwinkelverlauf zu achten ist, insbesondere einen stetigen Verlauf des Schwenkwinkels.

In einer ersten Variante kann dabei vorgesehen sein, dass insbesondere durch einen ansteigenden geraden Abstand zum Tangentenpunkt ein Kurvenausgang detektiert wird, wonach zu einer statischen Vorausschau übergegangen wird, wobei der kennzeichnende Abstand der statischen Vorausschau so gewählt wird, dass der für den letzten aufgefundenen Tangentenpunkt ermittelte Schwenkwinkel dem in der statischen Vorausschau unter diesem Abstand bestimmten Winkel entspricht. In dieser Variante wird folglich die Entfernung vom Kraftfahrzeug zum Tangentenpunkt zur Kurvenausgangsdetektion verwendet. Bei der Kurveneinfahrt wird diese Entfernung zunächst schrumpfen und - vom Idealfall eines konstanten Radius ausgehend - bei der Kreisdurchfahrt zunächst im Wesentlichen konstant bleiben. Sobald sich der Tangentenpunkt jedoch auf der ausfahrenden Klothoide befindet, wird diese Entfernung wieder ansteigen, so dass hierüber der Kurvenausgang detektiert wird. Beispielsweise kann ein Schwellwert vorgesehen werden, den die Differenz zum kleinsten detektierten Abstand des Tangentenpunkts zum Fahrzeug überschreiten muss, um den Kurvenausgang zu detektieren. Ist der Kurvenausgang erst detektiert, so wird ein kennzeichnender Abstand für eine statische Vorausschau gesucht, die denselben Schwenkwinkel hervorruft wie das letzte tangentiale Anpeilen, so dass ein schwenkwinkelstetiger Übergang erreicht wird. Das weitere Ausschwenken der Frontscheinwerfer in der Kurve erfolgt dann über die statische Vorausschau. In diesem Fall ist mithin kein Übergangsbereich notwendig.

In einer zweiten Variante eines hybriden Verfahrens kann vorgesehen sein, dass ab dem Zeitpunkt, ab dem eine Tangente nicht mehr auffindbar ist, die zuletzt aufgefundene Tangente solange zur Spurmitte hin querverschoben wird, bis entweder ein Schnittpunkt mit dem Bezugspunkt aufgefunden wird, wobei der so verschobene Tangentenpunkt als Anpeilpunkt verwendet wird, oder der Tangentenpunkt auf der Spurmitte zu liegen kommt, woraufhin zu einer statischen Vorausschau übergegangen wird, deren kennzeichnender Abstand der initiale Abstand des verschobenen Tangentenpunkts auf der Spurmitte ist. In dieser Variante wird folglich die Kurvenausgangsdetektion durch den Verlust des Tangentenpunktes genutzt. Ab dem Verlust des Tangentenpunktes wird der Anpeilpunkt durch Querverschiebung auf die Trajektorie geführt, was in einem Übergangsbereich geschehen kann. Danach wird eine statische Vorausschau durchgeführt. Es sei jedoch angemerkt, dass es im Rahmen der vorliegenden Erfindung auch denkbar ist, nicht für die querverschobene Tangente weiter einen Schnittpunkt zu suchen, sondern dass einfach eine gewisse Zeit bzw. eine feste Wegstrecke festgelegt wird, über die dann in entsprechenden Schritten die Querverschiebung der Tangente solange in insbesondere äquidistanten Schritten erfolgt, bis die Spurmitte erreicht ist und auf die statische Vorausschau übergegangen werden kann.

In einer dritten Variante eines hybriden Verfahrens kann vorgesehen sein, dass ein Zeitpunkt ermittelt wird, zu dem ein virtuelles, dem Kraftfahrzeug in einem insbesondere von der Kurvenkrümmung abhängigen Abstand vorausfahrendes Kraftfahrzeug keinen Tangentenpunkt mehr auffinden kann, woraufhin von diesem Zeitpunkt ab die zuletzt bezüglich des Kraftfahrzeugs aufgefundene Tangente solange in insbesondere äquidistanten Schritten zur Spurmitte hin querverschoben wird, bis der Tangentenpunkt auf der Spurmitte zu liegen kommt, woraufhin zu einer statischen Vorausschau übergegangen wird, deren kennzeichnender Abstand der initiale Abstand des verschobenen Tangentenpunkts auf der Spurmitte ist. In dieser Variante soll folglich schon früher bestimmt werden, wann der Tangentenpunkt verloren gehen wird. Entsprechend wird mit der Querverschiebung auch schon früher begonnen, wobei wiederum gilt, dass die Zeit bzw. die Wegstrecke, bis die Spurmitte erreicht ist, verschieden gewählt werden kann. Genutzt wird hierzu ein virtuelles Fahrzeug, welches in einem bestimmten, vorteilhafterweise von der Kurvenkrümmung abhängigen, Abstand vor dem eigentlichen Kraftfahrzeug fährt. Dabei kann beispielsweise davon ausgegangen werden, dass das virtuelle Fahrzeug als ideale Trajektorie die Spurmitte verfolgt. Es sei an dieser Stelle noch angemerkt, dass es generell, wie in der ersten und der dritten Variante schon beschrieben, vorteilhaft ist, frühzeitig vor dem Verlust des Tangentenpunktes auf die Trajektorie, also die Spurmitte, rückzuschwenken und auf die statische Vorausschau überzugehen, da bei den verwendeten Daten natürlich auch mit Totzeiten zu rechnen ist.

Eine solche frühzeitige Bestimmung des Kurvenausgangs bzw. des Verlusts des Tangentenpunktes wird auch mit der vierten Variante des hybriden Verfahrens erreicht, bei welchem vorgesehen ist, dass ein Zeitpunkt ermittelt wird, zu dem kein Tangentenpunkt auf einer von der betrachteten Spurbegrenzung um einen vorbestimmten Abstand nach außen verschobenen Begrenzungslinie mehr aufgefunden werden kann, woraufhin von diesem Zeitpunkt ab die zuletzt bezüglich der Spurbegrenzung aufgefundene Tangente solange in insbesondere äquidistanten Schritten zur Spurmitte hin querverschoben wird, bis der Tangentenpunkt auf der Spurmitte zu liegen kommt, woraufhin zu einer statischen Vorausschau übergegangen wird. Es wird also eine weiter außen liegende, virtuelle oder real vorhandene Begrenzungslinie, beispielsweise die Spurbegrenzung der linken Spur bei einer Linkskurve, verwendet, um frühzeitig den Verlust des Tangentenpunkts vorauszusehen. Dies ist möglich, da bei der weiter außen liegenden Begrenzungslinie dieser Verlust früher stattfindet. Danach kann auf die bezüglich der dritten Variante schon beschriebene Art auf die statische Vorausschau übergegangen werden.

Auch bei einer geraden Strecke wird häufig kein Tangentenpunkt zu bestimmen sein oder nur ein Tangentenpunkt, der in einer extremen Entfernung vor dem Kraftfahrzeug befindlich ist. Es wäre nicht realistisch, anzunehmen, dass ein Kraftfahrer so weiten Entfernungen mit dem Auge folgen würde. Daher kann erfindungsgemäß vorgesehen sein, dass eine Kurve dann detektiert und die tangentiale Vorausschau begonnen wird, wenn ein Tangentenpunkt mit einem geraden Abstand, der kleiner als ein vorbestimmter Schwellwert, insbesondere 100 m bis 150 m, ist, aufgefunden wird. Es wird also, beispielsweise auf geraden Strecken, solange keine Verschwenkung vorgenommen, bis der gerade Abstand zu einem aufgefundenen Tangentenpunkt kleiner als ein vorbestimmter Schwellwert ist, der beispielsweise 150 m betragen kann. Dann wird letztlich eine Kurve detektiert und eine tangentiale Vorausschau begonnen, um eine Verschwenkung der Frontscheinwerfer gemäß dem erfindungsgemäßen Verfahren zu erreichen. Der genannte Entfemungsbereich entspricht letztlich dem, der auch die Fixationsreichweite eines Fahrers in Kurven bei Tag beschreibt. Dies trägt also weiter zur Abbildung des Blickverhaltens des Fahrers bei.

Zur Ermittlung der Positionsinformation und/oder der Fahrtrichtungsinformation kann ein insbesondere satellitengestützter Positionssensor, insbesondere ein GPS-Sensor, verwendet werden. Solche Systeme sind weitgehend bekannt und insbesondere in Kombination mit einem Navigationssystem häufig in Kraftfahrzeugen verbaut. Sie bestimmen die Position und Orientierung des Kraftfahrzeugs äußerst genau.

Vorteilhaft ergänzt werden kann dies folglich, wenn der Straßenverlauf aus einem Navigationssystem bestimmt wird. Häufig ist bei Navigationssystemen und ihren Kartendaten der Straßenverlauf nur als Mittellinie vorgegeben. Daher kann mit besonderem Vorteil beim erfindungsgemäßen Verfahren vorgesehen sein, dass die Spurbreite mittels wenigstens eines Sensors bestimmt und zur Bestimmung der Spurbegrenzungen verwendet wird. Beispielsweise können hierzu Sensoren eines sogenannten Spurhaltesystems ("lane departure warning") genutzt werden, jedoch sind auch andere Möglichkeiten denkbar, wie beispielsweise Straßenbegrenzungen optisch oder anderweitig aufnehmen, wobei die Fahrspurbreite beispielsweise anhand einer Bildverarbeitung ermittelt werden kann.

Grundsätzlich sind selbstverständlich auch andere Möglichkeiten denkbar, die Position des Kraftfahrzeugs, die Fahrtrichtung und den zukünftigen Straßenverlauf zu ermitteln. Beispielsweise kann eine Kamera, insbesondere eine Stereokamera, vorgesehen werden, über die durch eine Bildverarbeitung der zukünftige Straßenverlauf ermittelt wird oder dergleichen. Nachtsichtkameras lassen sich dabei besonders vorteilhaft einsetzen. Es sind daher grundsätzlich verschiedene Möglichkeiten denkbar, die für das erfindungsgemäße Verfahren benötigten Informationen zu erhalten.

Neben dem erfindungsgemäßen Verfahren betrifft die Erfindung auch ein Kraftfahrzeug, umfassend wenigstens einen, insbesondere zwei, schwenkbaren Frontscheinwerfer und ein den Frontscheinwerfer ansteuerndes Steuergerät, welches zur Durchführung des erfindungsgemäßen Verfahrens ausgebildet ist. Das Kraftfahrzeug umfasst mithin auch Mittel, um die Position des Kraftfahrzeugs, seine Fahrtrichtung und den zukünftigen Straßenverlauf zu ermitteln, so dass die Eingangsgrößen für das erfindungsgemäße Verfahren bekannt sind. Dann kann rechnerisch ermittelt werden, ob eine Tangente und ein Tangentenpunkt vorliegen, woraus dann ein Schwenkwinkel ermittelt werden kann, mit welchem die Frontscheinwerfer entsprechend angesteuert werden. Dabei gelten die oben bezüglich des erfindungsgemäßen Verfahrens getätigten Ausführungen analog für das erfindungsgemäße Kraftfahrzeug, so dass dieses insbesondere einen Positionssensor, insbesondere einen GPS-Sensor, und/oder ein Navigationssystem und/oder einen Sensor zur Ermittlung der Spurbreite umfassen kann. Diese stehen dann in Kommunikationsverbindung, beispielsweise über ein Bussystem, insbesondere einen CAN-Bus, mit dem Steuergerät, so dass die Informationen im Rahmen des erfindungsgemäßen Verfahrens genutzt werden können.

Weitere Vorteile und Einzelheiten der vorliegenden Erfindung ergeben sich aus den im Folgenden dargestellten Ausführungsbeispielen sowie anhand der Zeichnung. Dabei zeigen:
- Fig. 1: ein erfindungsgemäßes Kraftfahrzeug,
- Fig. 2: eine Skizze zum Verlust des Tangentenpunktes am Kurvenausgang,
- Fig. 3: einen allgemeinen Ablaufplan des erfindungsgemäßen Verfahrens,
- Fig. 4: eine Skizze zur ersten Variante des hybriden Verfahrens,
- Fig. 5: zwei Graphen zur ersten Variante des hybriden Verfahrens,
- Fig. 6: eine Skizze zur zweiten Variante des hybriden Verfahrens,
- Fig. 7: eine Skizze zur dritten Variante des hybriden Verfahrens, und
- Fig. 8: eine Skizze zur vierten Variante des hybriden Verfahrens.

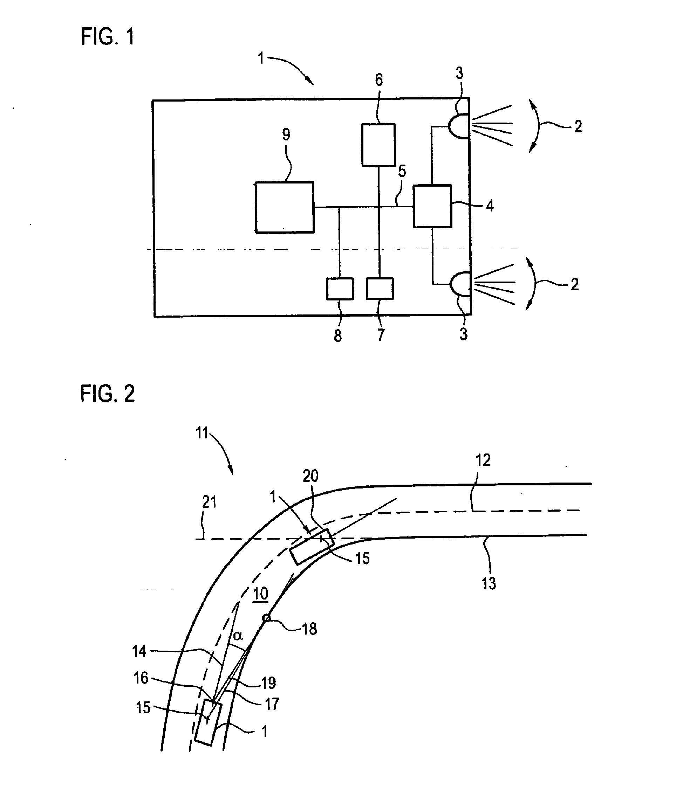

Fig. 1 zeigt ein erfindungsgemäßes Kraftfahrzeug 1. Es umfasst zwei gemäß der Pfeile 2 verschwenkbare Frontscheinwerfer 3, die über ein Steuergerät 4 angesteuert werden können, welches zur Durchführung des erfindungsgemäßen Verfahrens ausgebildet ist, mithin eine tangentiale Vorausschau durchführen kann. Über ein Bussystem 5, insbesondere einen CAN-Bus, ist das Steuergerät 4 mit einem Navigationssystem 6, einem GPS-Sensor 7, einem Sensor 8 zur Ermittlung der Fahrspurbreite und weiteren bei 9 angedeuteten Fahrzeugsystemen verbunden.

Das erfindungsgemäße Verfahren beruht grundsätzlich darauf, dass statt der bekannten statischen Vorausschau teilweise eine tangentiale Vorausschau stattfindet, was im Hinblick auf Fig. 2 näher erläutert werden soll. Fig. 2 zeigt das erfindungsgemäße Kraftfahrzeug 1 auf einer Fahrspur 10 in einer Kurve 11. Aus dem Navigationssystem 6 ist der zukünftige Straßenverlauf in Form der Mittellinie 12 bekannt, durch den Sensor 8 zur Ermittlung der Spurbreite kann zudem auch die rechte Fahrspurbegrenzung 13 ermittelt werden. Ferner werden die Position und die Orientierung des Kraftfahrzeugs 1 durch den GPS-Sensor 7 ermittelt. Die Position des Kraftfahrzeugs 1 und die Fahrtrichtung 14 sind mithin auch bekannt.

Gestützt auf diese Informationen setzt die tangentiale Vorausschau im erfindungsgemäßen Verfahren an. Dazu sind im Kraftfahrzeug 1 zwei ausgezeichnete Punkte vorhanden, nämlich zum einen der Bezugspunkt 15, der die Sitzposition des Fahrers wiedergibt, zum anderen aber der Mittenpunkt 16 zwischen den beiden Frontscheinwerfern 3.

Es wird nun bei der tangentialen Vorausschau versucht, eine Tangente 17 an die kurveninnere Fahrspurbegrenzung 13 zu konstruieren, die diese folglich in einem Tangentenpunkt 18 berührt, und die gleichzeitig den Bezugspunkt 15 durchquert. Der Tangentenpunkt 18 wird nun als Anpeilpunkt verwendet, so dass der Winkel α zwischen einer der Tangentenpunkt 18 und den Mittenpunkt 16 verbindenden Gerade 19 und der Fahrtrichtung 14 bestimmt wird, welche als Schwenkwinkel für die Frontscheinwerfer 3 dient. Die Frontscheinwerfer 3 leuchten also in Richtung des als Anpeilpunkt verwendeten Tangentenpunktes 18.

Ein solcher Tangentenpunkt 18 lässt sich jedoch nicht für jede Position des Kraftfahrzeugs 1 in der Kurve 11 bestimmen, wie durch die weitere Position 20 des Kraftfahrzeugs 1 in Fig. 2 erläutert wird. Dort entspricht die bei 21 angedeutete Tangente exakt der Richtung, in der die Straße gerade weiter verläuft, das bedeutet, über die Tangente 21 hinaus lässt sich kein Tangentenpunkt mehr finden, dessen Tangente den Bezugspunkt 15 noch schneidet.

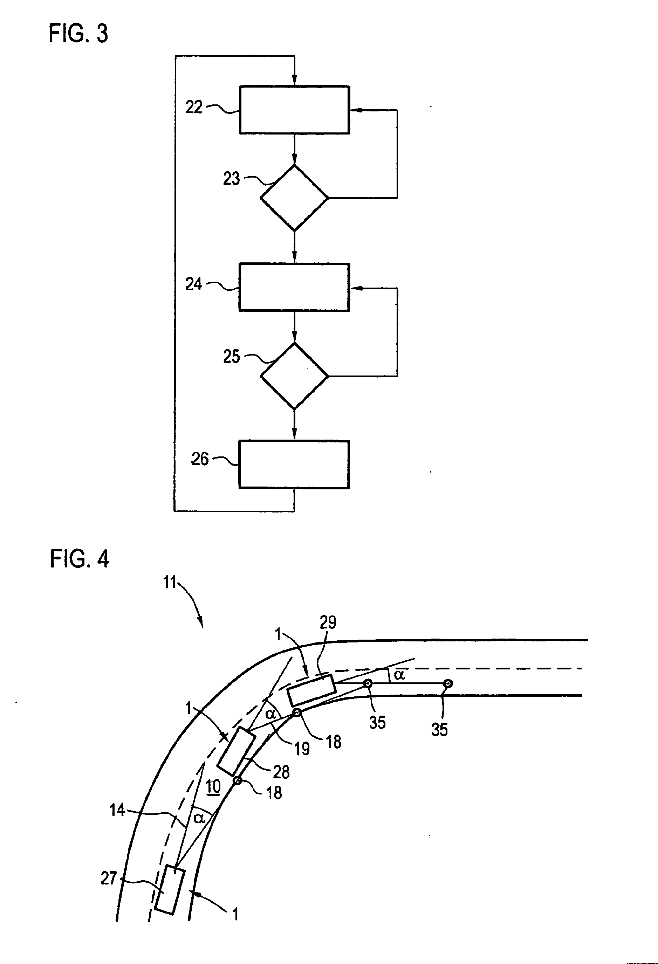

Erfindungsgemäß ist nun vorgesehen, in den Bereichen, in denen kein Tangentenpunkt 18 mehr aufgefunden werden kann, eine statische Vorausschau zu verwenden, so dass sich letztlich ein hybrides Verfahren ergibt. Zur Realisierung dieses Übergangs werden im Folgenden vier Varianten des erfindungsgemäßen Verfahrens vorgestellt, wobei zunächst der allgemeine Ablauf des erfindungsgemäßen Verfahrens anhand der Fig. 3 dargestellt werden soll.

In einem Schritt 22 wird, wenn beispielsweise eine gerade Strecke durchfahren wird, versucht, eine Tangente 17 und einen Tangentenpunkts 18 zu bestimmen, der das Nahen einer Kurve anzeigen würde. In einem Schritt 23 wird dann überprüft, ob ein solcher Tangentenpunkt aufgefunden wurde und ob der gerade Abstand des Bezugspunkts 15 oder auch des Mittenpunkts 16 zu dem Tangentenpunkt 18 einen vorbestimmten Schwellwert, hier 150 m, unterschreitet. Ist dies nicht der Fall, so wird mit Schritt 22 fortgefahren. Trifft dies zu, wird in Schritt 24 auf die tangentiale Vorausschau, wie sie eben beschrieben wurde, übergegangen. In einem Schritt 25 wird überprüft, ob ein insbesondere den Kurvenausgang anzeigendes Kriterium zum Übergang auf die statische Vorausschau gegeben ist. Ist dies nicht der Fall, wird bei Schritt 24 fortgefahren.

Ist das Kriterium jedoch erfüllt, so wird, gegebenenfalls nach einem Übergangsbereich, in einem Schritt 26 nunmehr auf eine statische Voraussschau übergegangen, bis wieder ein geeigneter Tangentenpunkt 18 aufgefunden werden kann. Dabei wird beim Übergang auf die statische Vorausschau in Schritt 26 besonders darauf geachtet, dass ein schwenkwinkelstetiger Übergang erfolgt. Es sei an dieser Stelle noch angemerkt, dass es, falls in Schritt 23 die tangentiale Vorausschau aktiviert wird, durchaus zu einem kleineren Sprung im Schwenkwinkel kommen kann. Dies ist aber gewollt: Es weist den Fahrer deutlich darauf hin, dass er nun bei der Durchfahrt einer Kurve unterstützt wird.

Im Folgenden werden nun vier Varianten für den Übergang von der tangentialen Vorausschau auf die statische Vorausschau näher dargestellt.

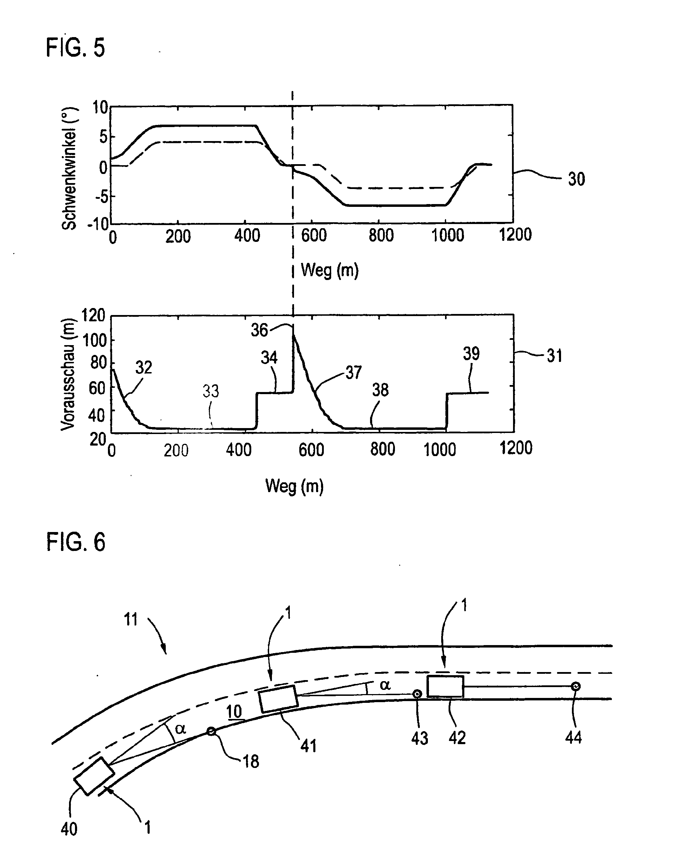

Eine erste Variante wird durch die Fig. 4 und 5 näher dargestellt. Fig. 4 zeigt wiederum das Kraftfahrzeug 1 in verschiedenen Positionen 27, 28 und 29 auf der Fahrspur 10 der Kurve 11. In der Position 27 wird wie üblich die tangentiale Vorausschau durchgeführt. Es sei angemerkt, dass zum Zwecke der besseren Darstellbarkeit die Unterscheidung zwischen Bezugspunkt 16 und Mittenpunkt 15 hier nicht mehr dargestellt wird, jedoch dennoch gegeben ist.

In der Position 28 wurde jedoch mit dem Kurvenausgang ein Kriterium festgestellt, um auf die statische Vorausschau überzugehen, was durch die Graphen in Fig. 5 näher erläutert wird. Der obere Graph 30 zeigt dabei den Schwenkwinkel aufgetragen über dem zurückgelegten Weg, der untere Graph 31 zeigt den Verlauf der Vorausschauentfernung - also den geraden Abstand zum Tangentenpunkt bzw. den Abstand zum Anpeilpunkt bei der statischen Vorausschau - ebenso gegenüber dem zurückgelegten Weg. Dabei wird zunächst eine Rechtskurve durchfahren, danach eine Linkskurve. Zum Vergleich ist im Graphen 30 zudem noch gestrichelt ein lenkwinkelbavierter Schwenkwinkel gezeigt, also ein in einem nicht prädiktiven Verfahren ermittelter Schwenkwinkel.

Anhand des Graphen 31 wird ersichtlich, dass sich das Kraftfahrzeug, da der Abstand zum Tangentenpunkt sich verringert, der Kurve nähert und in diese einfährt, Bereich 32. Durchfährt er die Kurve, die hier mit einem konstanten Krümmungsradius angenommen wird, ändert sich der Abstand zum Tangentenpunkt eine ganze Zeit lang nicht, Bereich 33. Am Ende des Bereichs 33 ist jedoch zu erkennen, dass der Abstand zum Tangentenpunkt wieder zu steigen beginnt - das Kraftfahrzeug 1 nähert sich also dem Kurvenausgang. Dies entspricht der Position 28 in Fig. 4. Überschreitet diese Erhöhung des Abstands einen gewissen Grenzwert, so ist das Kriterium gegeben, um auf die statische Vorausschau umzuschalten. Dies ist im Graphen 31 erkennbar durch den Sprung auf einen konstanten Wert 34. Der Übergang erfolgt in dieser Variante also ohne einen Übergangsbereich, was anhand der Fig. 4 näher erläutert werden soll.

Dort ist nun in der Position 28 das Kriterium erfüllt. Mithin wird im vorliegenden Fall die Gerade 19 so verlängert, dass sie die Spurmitte schneidet. Der Punkt, an dem dieses geschieht, ist nun der neue Anpeilpunkt 35 und er definiert den die statische Vorausschau kennzeichnenden Abstand entlang der Spurmitte, die als Trajektorie angenommen wird. Der so bestimmte kennzeichnende Abstand wird dann beibehalten, er entspricht dem Wert 34 im Graphen 31 der Fig. 5. Dies wird durch die weitere Position 29 in Fig. 4 nochmals näher erläutert.

In Fig. 5 ist nun auch der Fall zu sehen, dass eine weitere Kurve durchfahren wird. Diese wird erreicht, nachdem an der Stelle 36 wiederum ein Tangentenpunkt 18 aufgefunden wurde, dessen Abstand kleiner als der erwähnte vorbestimmte Schwellwert ist. Dann wird entsprechend wieder auf die tangentiale Vorausschau übergegangen, der Abstand fällt erneut in einem Bereich 37 ab, erreicht in einem Bereich 38 einen konstanten Wert, wird am Ende dieses Bereichs wieder ansteigen, so dass erneut auf die statische Vorausschau bei einem Wert 39 übergegangen wird.

Ersichtlich ist, vgl. hierzu den Graphen 30, mithin ein stetiger Verlauf des Schwenkwinkels gegeben, bis auf den Eintritt in die neue Kurve, Stelle 36, was aber, wie bereits erwähnt, durchaus erwünscht ist. Der Schwenkwinkel verläuft viel eher dem Blickverhalten des Fahrers angepasst, als dies im gestrichelt gezeigten nicht prädiktiven Fall gegeben wäre, und auch besser dem Blickverhalten des Fahrers angepasst als bei einer lediglich statischen Vorausschau.

Fig. 6 zeigt eine zweite Variante des hybriden Verfahrens. Wiederum ist das Kraftfahrzeug 1 in verschiedenen Positionen 40, 41 und 42 auf der Fahrspur 10 in der Kurve 11 zu sehen. In der Position 40 wird wie üblich die tangentiale Vorausschau verwendet. In dieser Variante ist das Kriterium für einen Wechsel auf die statische Vorausschau erreicht, wenn kein Tangentenpunkt 18 mehr aufgefunden werden kann. Dann ist vorgesehen, die letzte noch bekannte Tangente in einem Übergangsbereich so zu verschieben, dass sich die verschobene Tangente noch mit dem Bezugspunkt 15 kreuzt. Ein solcher Zwischenzustand ist in der Position 41 gezeigt. Der so verschobene Tangentenpunkt bildet dann im Übergangsbereich den Anpeilpunkt 43. Wird der Tangentenpunkt jedoch schließlich ganz auf die Spurmitte verschoben, ist der endgültige Übergang auf die statische Vorausschau erreicht, er definiert als neuer Anpeilpunkt 44 die kennzeichnende Entfernung für die statische Vorausschau, wie dies durch die Position 42 angedeutet wird. Es sei angemerkt, dass auch unabhängig von einem Schneiden des Bezugspunktes 15 eine Verschiebung in Richtung der Spurmitte gegeben sein kann, welche dann schrittweise über einen bestimmten Zeitraum oder eine bestimmte Wegstrecke erfolgt.

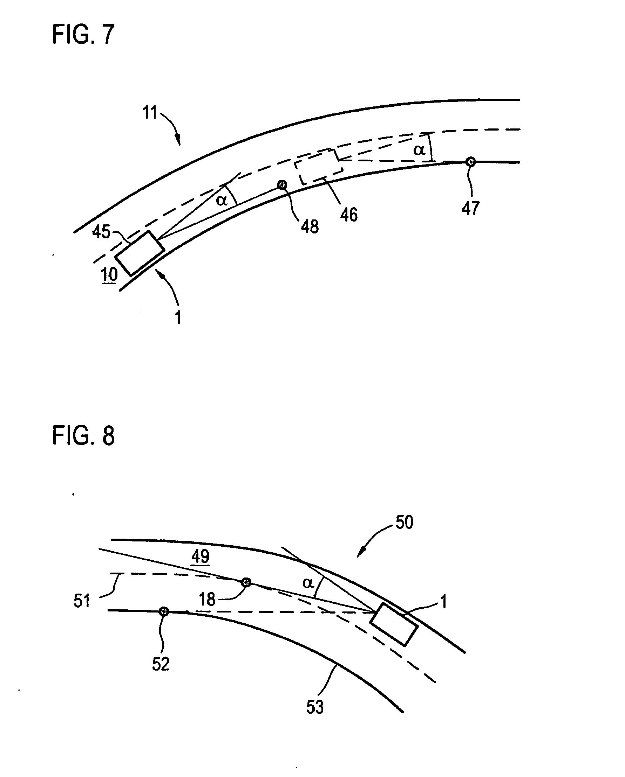

Fig. 7 erläutert eine dritte Variante eines hybriden Verfahrens. Gezeigt ist wiederum das Kraftfahrzeug 1 auf einer Fahrspur 10 in der Kurve 11, diesmal jedoch nur in einer Position 45. In dieser Variante des Verfahrens wird die Kurvenausgangsdetektion über ein virtuelles Fahrzeug 46 erreicht, welches dem Fahrzeug 1 um einen vorbestimmten Abstand vorausfahrend angenommen wird, welcher Abstand vom Krümmungsradius der Kurve 11 abhängig sein kann. Für das virtuelle Fahrzeug 46 werden ebenso eine virtuelle Tangente und mithin ein virtueller Tangentenpunkt 47 bestimmt. In dem Moment, in dem das vorausfahrende virtuelle Fahrzeug 46 keinen Tangentenpunkt 47 mehr auffinden kann, gilt der Kurvenausgang als detektiert und es wird auf die statische Vorausschau übergegangen. Dies erfolgt wiederum durch Verschiebung der zuletzt für das Kraftfahrzeug 1 aufgefundenen Tangente in Richtung der Spurmitte, wobei ein derartiger Zwischenzustand in der Position 45 des Kraftfahrzeugs 1 angedeutet ist, wobei der verschobene Tangentenpunkt wiederum als Anpeilpunkt 48 dient. Das Verschieben erfolgt dabei über eine vorbestimmte Zeitspanne oder eine vorbestimmte zurückgelegte Wegstrecke in Schritten, bis die Spurmitte erreicht ist, wobei dann durch den verschobenen Tangentenpunkt als Anpeilpunkt der entsprechende kennzeichnende Abstand der statischen Vorausschau definiert wird.

Schließlich zeigt Fig. 8 eine Skizze zur Erläuterung der vierten Variante des hybriden Verfahrens, wobei das Kraftfahrzeug 1 diesmal auf einer Fahrspur 49 einer Linkskurve 50 gezeigt ist. In dieser Variante wird nicht nur die Tangente bezüglich eines Tangentenpunktes 18 auf der Mittellinie 51 bestimmt, sondern auch ein Tangentenpunkt 52 bezüglich einer von der Fahrspurbegrenzung, also der Mittellinie 51, nach außen verschobenen Begrenzungslinie 53, hier der Begrenzung der linken Fahrspur. Es ist selbstverständlich auch möglich, im Falle einer Rechtskurve eine virtuelle, um einen ähnlichen oder gleichen Abstand beabstandete Begrenzungslinie zur rechten Fahrspurbegrenzung zu betrachten.

In Fig. 8 ist nun die Situation dargestellt, in der auf der Begrenzungslinie 53 gerade der Tangentenpunkt 52 verloren geht. Dies gilt als Kriterium für die Detektion des Kurvenausgangs, so dass ausgehend von der letzten für das Kraftfahrzeug 1 und die Mittellinie 51 bestimmten Tangente diese nun wiederum mitsamt dem Tangentenpunkt 18, wie auch bei der dritten Variante, in Richtung der Spurmitte verschoben wird.

## Patentansprüche

1. Verfahren zur prädiktiven Ansteuerung eines adaptiven Kurvenlichts, wobei aus einer Positions- und Fahrtrichtungsinformation des Kraftfahrzeugs (1) und einem Straßenverlauf ein Schwenkwinkel (α) ermittelt wird, um den wenigstens ein Frontscheinwerfer (3) des Kraftfahrzeugs (1) geschwenkt wird,
wobei der Schwenkwinkel (α) teilweise unter Berücksichtigung einer tangentialen Vorausschau ermittelt wird, bei der eine Tangente (17) an eine Fahrspurbegrenzung (13) der Kurveninnenseite, die einen vorbestimmten Bezugspunkt des Kraftfahrzeugs (1), insbesondere die Position des Fahrers (15),
schneidet, sowie ein zugehöriger Tangentenpunkt (18) ermittelt wird, woraus der Schwenkwinkel (α) ermittelt wird,
**dadurch gekennzeichnet**, daβ in Bereichen, in denen keine Tangente (17) aufgefunden wird, nach einem gegebenenfalls vorgesehenen Übergangsbereich, der Schwenkwinkel (α) aufgrund einer statischen Vorausschau bestimmt wird, wobei ein in einem festen Abstand zum Kraftfahrzeug (1) auf der Fahrspurmitte liegender Punkt als Anpeilpunkt (35) verwendet wird.

2. Verfahren nach Anspruch 1,
**dadurch gekennzeichnet,**
**dass** der Schwenkwinkel (α) als Winkel zwischen der Fahrtrichtung 14 und einer den Mittenpunkt zwischen den insbesondere zwei Frontschein-werfern (3) und den Tangentenpunkt (18) als Anpeilpunkt verbindenden Gerade (19) ermittelt wird.

3. Verfahren nach Anspruch 1 oder 2,
**dadurch gekennzeichnet,**
**dass** insbesondere durch einen ansteigenden geraden Abstand zum Tangentenpunkt (18) ein Kurvenausgang detektiert wird, wonach zu einer statischen Vorausschau übergegangen wird, wobei der kennzeichnende Abstand so gewählt wird, dass der für den letzten aufgefundenen Tangentenpunkt (18) ermittelte Schwenkwinkel (α) dem in der statischen Vorausschau unter diesem Abstand bestimmten Winkel entspricht.

4. Verfahren nach Anspruch 1 oder 2,
**dadurch gekennzeichnet,**
**dass** ab dem Zeitpunkt, ab dem eine Tangente (17) nicht mehr auffindbar ist, die zuletzt aufgefundene Tangente (17) so lange zur Spurmitte hin querverschoben wird, bis entweder ein Schnittpunkt mit dem Bezugspunkt aufgefunden wird, wobei der so verschobene Tangentenpunkt als Anpeilpunkt verwendet wird, oder der Tangentenpunkt auf der Spurmitte zu liegen kommt, woraufhin zu einer statischen Vorausschau übergegangen wird, deren kennzeichnender Abstand der initiale Abstand des verschobenen Tangentenpunkts auf der Spurmitte ist.

5. Verfahren nach Anspruch 1 oder 2,
**dadurch gekennzeichnet,**
**dass** ein Zeitpunkt ermittelt wird, zu dem ein virtuelles, dem Kraftfahrzeug (1) in einem insbesondere von der Kurvenkrümmung abhängigen Abstand vorausfahrendes Kraftfahrzeug (46) keinen Tangentenpunkt (47) mehr auffinden kann, woraufhin von diesem Zeitpunkt ab die zuletzt bezüglich des Kraftfahrzeugs aufgefundene Tangente so lange in insbesondere äquidistanten Schritten zur Spurmitte hin querverschoben wird, bis der Tangentenpunkt auf der Spurmitte zu liegen kommt, woraufhin zu einer statischen Vorausschau übergegangen wird, deren kennzeichnender Abstand der initiale Abstand des verschobenen Tangentenpunkts auf der Spurmitte ist.

6. Verfahren nach Anspruch 1 oder 2,
**dadurch gekennzeichnet,**
**dass** ein Zeitpunkt ermittelt wird, zu dem kein Tangentenpunkt auf einer von der betrachteten Spurbegrenzung um einen vorbestimmten Abstand nach außen verschobenen Begrenzungslinie mehr aufgefunden werden kann, woraufhin von diesem Zeitpunkt ab die zuletzt bezüglich der Spurbegrenzung aufgefundene Tangente so lange in insbesondere äquidistanten Schritten zur Spurmitte hin querverschoben wird, bis der Tangentenpunkt auf der Spurmitte zu liegen kommt, woraufhin zu einer statischen Vorausschau übergegangen wird, deren kennzeichnender Abstand der initiale Abstand des verschobenen Tangentenpunkts auf der Spurmitte ist.

7. Verfahren nach einem der vorangehenden Ansprüche,
**dadurch gekennzeichnet,**
**dass** eine Kurve (11) dann detektiert und die tangentiale Vorausschau begonnen wird, wenn ein Tangentenpunkt mit einem geraden Abstand, der kleiner als ein vorbestimmter Schwellwert, insbesondere 100m bis 150m, ist, aufgefunden wird.

8. Verfahren nach einem der vorangehenden Ansprüche,
**dadurch gekennzeichnet,**
**dass** zur Ermittlung der Positionsinformation und/oder der Fahrtrichtungsinformation ein insbesondere satellitengestützter Positionssensor ,
insbesondere ein GPS-Sensor (7), verwendet wird.

9. Verfahren nach einem der vorangehenden Ansprüche,
**dadurch gekennzeichnet,**
**dass** der Straßenverlauf aus einem Navigationssystem (6) bestimmt wird.

10. Verfahren nach Anspruch 9,
**dadurch gekennzeichnet,**
**dass** bei einem aus dem Navigationssystem (6) nur als Mittellinie (12) der Straße vorgegebenen Straßenverlauf die Spurbreite mittels wenigstens eines Sensor (8) bestimmt und zur Bestimmung der Spurbegrenzungen (13) verwendet wird.

11. Kraftfahrzeug (1), umfassend wenigstens einen, insbesondere zwei, schwenkbaren Frontscheinwerfer (3) und ein den Frontscheinwerfer (3) ansteuerndes Steuergerät (4), ausgebildet zur Durchführung des Verfahrens nach einem der vorangehenden Ansprüche.

## Claims

1. Method for predictive control of an adaptive headlamp, a pivot angle (α), about which at least one front headlamp (3) of the motor vehicle (1) is pivoted, being determined from information as to the position and direction of travel of the motor vehicle (1) and from the course of the road,
the pivot angle (α) being determined in part by taking account of a tangential projection in that a tangent (17) to a lane boundary (13) on the inside of the bend, which intersects with a predetermined reference point of the motor vehicle (1), in particular the position of the driver (15), and an associated tangent point (18) is determined, from which the pivot angle (α) is determined,
**characterised in that** in regions in which no tangent (17) is found, according to an optionally provided transition zone, the pivot angle (α) is determined on the basis of a static projection, while a point located in the centre of the lane at a fixed distance from the motor vehicle (1) is used as a bearing point (35).

2. Method according to claim 1,
**characterised in that**
the pivot angle (α) is determined as the angle between the direction of travel (14) and a straight line (19) that connects the centre point between the, in particular two, front headlamps (3) and the tangent point (18) as a bearing point.

3. Method according to claim 1 or 2,
**characterised in that** in particular through an increasing straight distance from the tangent point (18), an exit from a bend is detected, according to which a transition is made to a static projection, the characterising distance being selected such that the pivot angle (α) determined for the last tangent point (18) found corresponds to the angle determined in the static projection at this distance.

4. Method according to claim 1 or 2,
**characterised in that**
from the point in time after which a tangent (17) can no longer be found, the tangent (17) found last is displaced transversely towards the centre of the lane until either a point of intersection with the reference point is found, and the tangent point thus displaced is used as a bearing point, or the tangent point comes to lie in the centre of the lane, whereupon a transition is made to a static projection, the characterising distance of which is the initial distance of the displaced tangent point in the centre of the lane.

5. Method according to claim 1 or 2, **characterised in that** a point in time is determined at which a virtual motor vehicle (46) running ahead of the motor vehicle (1) at a distance which is dependent in particular on the curvature of the bend can no longer find a tangent point (47), whereupon, from this point in time onwards, the last tangent found in relation to the motor vehicle is displaced transversely towards the centre of the lane in equidistant steps, in particular, until the tangent point comes to lie in the centre of the lane, whereupon a transition is made to a static projection, the characterising distance of which is the initial distance of the displaced tangent point in the centre of the lane.

6. Method according to claim 1 or 2,
**characterised in that**
a point in time is determined at which it is no longer possible to find a tangent point on a boundary line displaced outwards by a predetermined distance from the lane boundary under consideration, whereupon, from this point in time onwards, the last tangent found in relation to the lane boundary is displaced transversely towards the centre of the lane in equidistant steps, in particular, until the tangent point comes to rest in the centre of the lane, whereupon a transition is made to a static projection, the characterising distance of which is the initial distance of the displaced tangent point in the centre of the lane.

7. Method according to one of the preceding claims,
**characterised in that**
a bend (11) is detected and the tangential projection started when a tangent point is found with a straight distance which is less than a predetermined threshold value, in particular 100 m to 150 m.

8. Method according to one of the preceding claims,
**characterised in that**
in order to determine the information as to the position and/or the direction of travel, an in particular satellite-assisted position sensor, in particular a GPS sensor (7), is used.

9. Method according to one of the preceding claims,
**characterised in that**
the course of the road is determined from a navigation system (6).

10. Method according to claim 9,
**characterised in that**
in a course of road that is predetermined, from the navigation system (6), only as the centre line (12) of the road, the lane width is determined by means of at least one sensor (8) and is used to determine the lane boundaries (13).

11. Motor vehicle (1) comprising at least one, in particular two, pivotable front headlamps (3) and a device (4) that controls the front headlamp (3), configured to carry out the method according to one of the preceding claims.

## Revendications

1. Procédé de commande prédictive d'un phare de virage adaptatif, un angle de pivotement (α) étant déterminé à partir d'une information de position et de sens de conduite du véhicule (1) et d'un tracé de la route, angle selon lequel au moins un phare avant (3) du véhicule (1) est pivoté,
l'angle de pivotement (α) étant déterminé en prenant en compte en partie une prévision tangentielle dans laquelle une tangente (17) à une limite de voie (13) du côté intérieur de la courbe qui coupe un point de référence prédéfini du véhicule (1), en particulier la position du conducteur (15), ainsi qu'un point tangentiel (18) correspondant sont déterminés, à partir de quoi l'angle de pivotement (α) est défini, **caractérisé en ce que**, dans les zones dans lesquelles aucune tangente (17) n'est trouvée, après une zone de transition éventuellement prévue, l'angle de pivotement (α) est défini sur la base d'une prévision statique, un point situé sur le milieu de voie à une distance fixe par rapport au véhicule (1) étant utilisé comme point de relèvement (35).

2. Procédé selon la revendication 1,
**caractérisé en ce que**
l'angle de pivotement (α) est déterminé en tant qu'angle entre le sens de conduite (14) et une droite (19) raccordant le point médian entre en particulier les deux phares avant (3) et le point tangentiel (18) en tant que point de relèvement.

3. Procédé selon la revendication 1 ou 2,
**caractérisé en ce**
**qu'**une sortie de courbe est détectée en particulier par une distance rectiligne croissante par rapport au point tangentiel (18), après quoi il s'effectue une transition vers une prévision statique, la distance caractéristique étant choisie de telle sorte que l'angle de pivotement (α) déterminé pour le dernier point tangentiel (18) trouvé correspond à l'angle défini dans la prévision statique sous cette distance.

4. Procédé selon la revendication 1 ou 2,
**caractérisé en ce que**,
à partir de l'instant à partir duquel une tangente (17) ne peut plus être trouvée, la tangente (17) trouvée en dernier est déplacée transversalement vers le milieu de voie jusqu'à ce que soit un point d'intersection avec le point de référence soit trouvé, le point tangentiel ainsi déplacé étant utilisé en tant que point de relèvement, soit jusqu'à ce que le point tangentiel arrive au milieu de voie, à la suite de quoi il se produit une transition vers une prévision statique dont la distance caractéristique est la distance initiale du point tangentiel déplacé sur le milieu de voie.

5. Procédé selon la revendication 1 ou 2,
**caractérisé en ce**
**qu'**il est déterminé un instant auquel un véhicule (46) virtuel précédent le véhicule (1) à une distance qui dépend en particulier de la courbure de la courbe ne peut plus trouver de point tangentiel (47), à la suite de quoi, à partir de cet instant, la dernière tangente trouvée concernant le véhicule est déplacée transversalement en particulier par étapes équidistantes vers le milieu de voie jusqu'à ce que le point tangentiel arrive au milieu de voie, à la suite de quoi il se produit une transition vers une prévision statique dont la distance caractéristique est la distance initiale du point tangentiel déplacé sur le milieu de voie.

6. Procédé selon la revendication 1 ou 2,
**caractérisé en ce**
**qu'**il est déterminé un instant auquel aucun point tangentiel ne peut plus être trouvé sur une ligne de limitation déplacée sur une distance prédéfinie vers l'extérieur par rapport à la limite de voie considérée, à la suite de quoi, à partir de cet instant, la tangente trouvée en dernier concernant la limite de voie est déplacée transversalement en particulier par étapes équidistantes vers le milieu de voie jusqu'à ce que le point tangentiel arrive au milieu de voie, à la suite de quoi il se produit une transition vers une prévision statique dont la distance caractéristique est la distance initiale du point tangentiel déplacé sur le milieu de voie.

7. Procédé selon une des revendications précédentes,
**caractérisé en ce**
**qu'**une courbe (11) est détectée et la prévision tangentielle est commencée quand un point tangentiel est trouvé qui a une distance rectiligne qui est inférieure à une valeur de seuil prédéfinie, en particulier de 100 m à 150 m.

8. Procédé selon une des revendications précédentes,
**caractérisé en ce que**,
pour la détermination de l'information de position et/ou du sens de conduite, il est utilisé un capteur de position en particulier assisté par satellite, en particulier un capteur GPS (7).

9. Procédé selon une des revendications précédentes,
**caractérisé en ce**
**que** le tracé de la route est défini à partir d'un système de navigation (6).

10. Procédé selon la revendication 9,
**caractérisé en ce que**,
pour un tracé de route fixé à l'avance à partir du système de navigation (6) uniquement en tant que ligne médiane (12) de la route, la largeur de voie est définie au moyen d'au moins un capteur (8) et est utilisée pour la définition des limites de voie (13).

11. Véhicule (1), comprenant au moins un phare avant (3) pivotant, en particulier deux, et un appareil de commande (4) commandant le phare avant (3), constitué pour exécuter le procédé selon une des revendications précédentes.
